# EUROPÄISCHE PATENTANMELDUNG

(11) **EP 1 106 863 A1**
(43) Veröffentlichungstag der Anmeldung: **13.06.2001**
(21) Anmeldenummer: 00123631.4
(22) Anmeldetag: 30.10.2000
(51) Int. Cl.: F16F 15/124

(54) **Federelement, vorzugsweise Torsionsdämpfer, insb. für Vorrichtung zum Heben und Senken von Kraftfahrzeugfensterscheiben**

(30) Priorität: 04.12.1999 DE 19958036
(71) Anmelder: Optimer Polymer-Technik GmbH, 37520 Osterode (DE)
(72) Erfinder: Jäger, Sebastian, Dipl.-Ing., 30657 Hannover (DE)
(74) Vertreter: Depmeyer, Lothar

(57) **Zusammenfassung**

Die Erfindung betrifft ein Federlement der obigen Art, und zwar ein Element mit einem Aussenring (11) und einem Innenring (12), wobei die beiden Ringe konzentrisch zueinander angeordnet sind, einen oder mehrere, an den beiden Ringen angehaftete Körper aus Gummi (16) od. dgl. zwischen sich aufnehmen und wesentlich härter eingestellt sind im Vergleich zu den Gummikörpern. Um bei diesen Elementen die Herstellung zu vereinfachen und die Kennlinie zu beeinflussen, ist erfindungsgemäss vorgesehen, die beiden Ringe einstückig über einen, vorzugsweise aber über mehrere speichenartige Stege (15,18,19) miteinander zu verbinden.

## Beschreibung

Die Erfindung betrifft ein Federelement, vorzugsweise einen Torsionsdämpfer, der insb. für Vorrichtungen zum Heben und Senken von Kraftfahrzeugfensterscheiben bestimmt ist.

Die Erfindung bezieht sich ferner auf solche Elemente der vorgenannten Art, die einen hart und steif eingestellten Aussenring und einen ebenso beschaffenen Innenring aufweisen, wobei die beiden Ringe konzentrisch zueinander angeordnet sind und einen oder mehrere, an den beiden Ringen angehaftete Körper aus Gummi oder gummiähnlichen Kunststoffen zwischen sich aufnehmen.

Bei bekannten Federelementen dieser Ausführung, z.B. Hülsenfedern, sind der Innenring einerseits und der Aussenring andererseits für sich hergestellte Bauteile, die in die Herstellungsform eingesetzt werden, um in dieser Form durch Einbringen des Kautschuks in den Raum zwischen den beiden erwähnten Ringen und durch Aushärten bzw. Vulkanisieren das Federelement fertigzustellen.

Bei einer solchen Herstellung bedarf es der Herstellung und der Handhabung unterschiedlich grosser Ringkörper. Zudem ist das federungstechische Verhalten der erwähnten Federelemente praktisch von dem zwischen den Ringen befindlichen Gummi od. dgl. abhängig.

Der Erfindung liegt die Aufgabe zugrunde, die Herstellung der eingangs genannten Federelemente zu verbessern und zudem die Federkennlinie des bzw. der zwischen den Ringen befindlichen Gummikörper zu beeinflussen.

Zur Lösung dieser Aufgabe sind erfindungsgemäss die beiden Ringe über einen, vorzugsweise aber über mehrere speichenartige Stege einstückig miteinander verbunden. Zweckmässigerweise erhalten dabei die Stege eine Wandstärke, die wesentlich geringer ist als diejenige der Ringe. Ausserdem können die Stege mit einer oder mehreren Sollbruchstellen versehen sein, um so unter bestimmten Voraussetzungen die bei der Herstellung des Federelementes hergestellte Verbindung wieder zu lösen. Eine solche Massnahme kann sich erübrigen, wenn die Stege eine solche Formgebung erhalten, dass sie bei Relativbewegungen der beiden Ringe eine Formveränderung erfahren können. So ist es beispielsweise möglich, die Stege wellen- oder zickzackförmig zu gestalten.

In Verfolg des Erfindungsgedankens können die Stege in den bzw. die zwischen den Ringen angeordneten Gummikörper eingebettet sein, wenngleich es auch möglich ist, die Stege und Gummikörper in Umfangsrichtung der Ringe gesehen aufeinander folgen zu lassen.

Die erfindungsgemäss vorgesehene Stegverbindung zwischen den beiden Ringen erleichtert die Handhabung und Anordnung bei der Fertigstellung des Federelementes, und zwar insb. bei der Manipulation in der Vulkanisierform. Zudem können sich die Federeigenschaften der vorerwähnten speichenartigen Verbindungselemente und diejenigen der weichelastischen Elemente ergänzen, und zwar insb. auch wegen der Dämpfungsqualität des Gummis.

Durch eine geeignete Gestaltung des Gummis und der Stegverbindungen kann das Federelement axial, radial und auf Verdrehung beansprucht werden. Eine Verwendung als Zapfenlager ist demnach ebenfalls möglich. Vorzugsweise soll das erfindungsgemässe Federelement jedoch als gedämpfte, drehelastische Verbindung und insb. für die Bewegungs- bzw. Hubantriebe für Kraftsfahrzeugfenster verwendet werden.

Im Rahmen dieser Erfindung soll der Begriff Gummi auch gummiähnliche Kunststoffe umfassen. Diese Werkstoffe sollen eine Härte von etwa 30 - 70 Shure A erhalten.

Die hart und steif eingestellten Ringe sollen vorzugsweise aus einem spritzfähigen, sich nach der Abformung zähhart einstellenden Kunststoff, z.B. aus einem.thermoplastischen Polymer gefertigt werden.

Weitere,Einzelheiten der Erfindung werden anhand der Zeichnung erläutert, in der ein Ausführungsbeispiel der Erfindung dargestellt ist.

Es zeigen :
Fig. 1 ein Schneckengetriebe als Bestandteil einer Vorrichtung zum Heben von Fahrzeugfenstern,
Fig. 2 das Getriebe gemäss Fig. 1 im Schnitt,
Fig. 3 einen Teil eines Innen- und Aussenringes für einen Torsionsdämpfer in der Ansicht und
Fig. 4 einen radialen Teilschnitt durch einen Innen- und Aussenring für einen abgewandelten Torsionsdämpfer.

Der Antriebsmotor bzw. eine geeignete Antriebskurbel der Vorrichtung zum Heben und Senken eines Fahrzeugfensters greifen bei M an der Welle einer Schnecke 1 an, der ein Radiallager 2 und ein Radial- und Axial-Lager 3 zugeordnet ist. Die Schnecke 1 treibt den starren Kranz 4 eines Schneckenrades 5 an, das über einen Torsionsdämpfer 6 mit einer Mitnehmerwelle 7 in Wirkverbindung steht, die auf einem feststehenden Zapfen 8 verdrehbar gelagert ist, eine O-Ring-Dichtung 9 aufweist und mit ihrem oberen Ende bei 10 den Abtrieb aufweist. Dazu kann bei 10 eine Verzahnung vorgesehen oder ein Zahnkranz od. dgl. zum Antrieb der folgenden Verstellelemente angebracht sein.

Der Torsionsdämpfer 6 weist einen Aussenring 11 und einen Innenring 12 auf, wobei der Aussenring 11 aussen mit über seinen Umfang verteilt angeordneten Vorsprüngen 13 versehen ist, die in entsprechende Vertiefungen des Kranzes 4 eingreift. Der Innenring 12 hat hingegen innen Vertiefungen, in die entsprechende Vorsprünge 14 der Mitnehmerwelle 7 eingreifen. Durch einen solchen Formschluss wird eine ausreichend drehfeste Verbindung geschaffen, und zwar sowohl im Hinblick auf den Aussenring 11 als auch im Hinblick auf den Innenring 12.

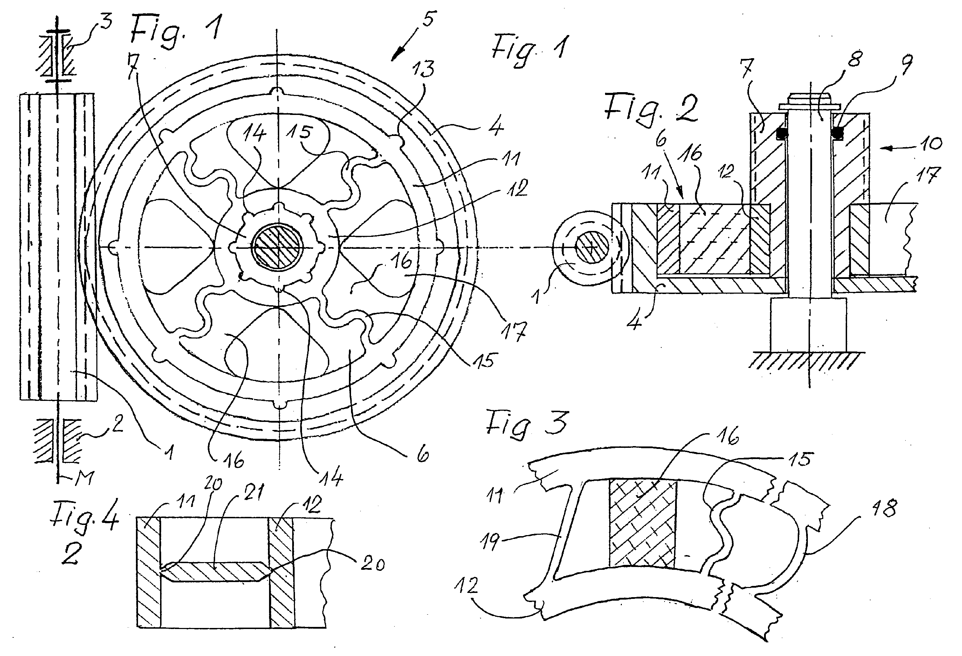

Zur Herstellung des Torsionsdämpfers werden die beiden Ringe 11, 12 gemeinsam durch Einspritzen od. dgl. abgeformt; damit dabei ein einziges, zusammenhängendes Produkt entstehen kann, sind die beiden Ringe 11, 12 durch s-förmige Stege 15 verbunden, deren Generalrichtung radial verläuft und die gleichmässig über den Ringumfang verteilt angeordnet sind. Im allgemeinen genügen jedoch hierbei 3 - 6 Stege, um so die beiden Ringe 11,12 zusammenzuhalten bzw. konzentrisch zu vereinigen. Der so entstandene Doppelring mit Stegen 15 wird in eine Vulkanisiierform eingesetzt, um hier den Gummi od. dgl. hinzuzufügen, und zwar vorzugsweise so, dass er mit den angrenzenden Teilen 11, 12 und 15 eine feste Verbindung eingeht. Bei der Ausführungsform gemäss Fig. 1 wird jedem Steg 15 ein etwa radial verlaufender Gummikörper 16 zugeordnet bzw. jeder Steg 15 wird in einen solchen Körper vorzugsweise mittig eingebracht.

Es versteht sich, dass bei dem so beschaffenen Torsionsdämpfer harte Federn durch Verformen der Stege 15 und weiche Federn in Form der eigengedämpften Gummikörper 16 gegebeen sind, wobei die Stege 15 aufgrund ihrer s-Gestalt eine Verformung zulassen.

Es sei erwähnt, dass bei der Ausführung gemäss Fig. 1 auch die zwischen den Gummikörpern 16 befindlichen Freiräume bei 17 mit Gummi od. dgl. ausgefüllt sein können.

Aus Fig. 3 ist erkennbar, dass die Gummikörper 16 einerseits und die Stege 15 andererseits voneinander getrennt sind. Erkennbar sind auch Stege 15, die von der s-Gestalt abweichen. So ist ein Steg 18 in Bogenform und ein Steg 19 gerade, jedoch schräg gerichtet vorgesehen.

Die getrennte Anordnung gemäss Fig. 3 hat den zusätzlichen Vorteil, dass ggfs. nach der Ausformung des Gummikörpers 16 alle bzw. ein Teil der vorhandenen Stege 15, 18, 19 mechanisch durchtrennt werden können, um so besondere Effekte in Bezug auf das Federungsverhalten erzielen zu können.

Eine selbsttätige Trennung der vorerwähnten Art kann auch durch Sollbruchstellen 20 an den Stegen 21 erreicht werden. Bei entsprechender Verformung des Dämpfers findet dabei eine entsprechend starke Beanspruchung der Stege 21 statt, die zur einer gewollten Trennung der Stege 21 von den Ringen 11, 12 führt.

Da die Ringe 11, 12 ohnehin in einer Form erstellt werden, kann bei ihrer Abformung der Kranz 4 bzw. die Mitnehmerwelle 7 einstückig mit erzeugt werden. Es ist sogar mölich, den O-Ring 9 sofort mit anzuformen.

## Patentansprüche

1. Federelement, vorzugsweise, Torsionsdämpfer, insb. für Vorrichtungen zum Heben und Senken von Kraftfahrzeugscheiben, mit einem Aussenring und Innenring, wobei dei beiden Ringe konzentrisch zueinander angeordnet sind, einen oder mehrere, an den beiden Ringen angehaftete Körper aus Gummi oder gummiähnlichen Kunststoffen zwischen sich aufnehmen und wesentlich härter eingestellt sind im Vergleich zu den Körpern aus Gummi und dgl., dadurch gekennzeichnet, dass die beiden Ringe (11,12) über einen, vorzugsweise aber über mehrere speichenartige Stege (15,18,19) einstückig und werkstoffgleich miteinander verbunden sind.

2. Federelement nach Anspruch 1, dadurch gekennzeichnet, dass die Stege (15,18,19) eine Wandstärke aufweisen, die wesentlich geringer ist als diejenige der Ringe (11,12).

3. Federelement nach Anspruch 1, dadurch gekennzeichnet, dass der Verlauf der Stege (11,12) zumindest stellenweise von der durch die Ringe (11,12) vorgegebenen Radialrichtung abweicht.

4. Federelement nach Anspruch 1 und 3, dadurch gekennzeichnet, dass die Stege (15,18,19) - in axialer Richtung des Federelementes gesehen - bogen- oder sförmig bzw. wellenförmig verlaufen.

5. Federelement nach Anspruch 1, dadurch gekennzeichnet, dass die Stege (15,18,19,21)) mit einer oder mehreren Sollbruchstellen (20) in der Weise versehen sind, dass sie mit oder während der Inbetriebnahme des Federelementes brechen.

6. Federelement nach Anspruch 1, dadurch gekennzeichnet, dass die Stege (15,18,19) in die Gummikörper (16) eingebettet sind.

7. Federelement nach Anspruch 1, dadurch gekennzeichnet, dass die Stege (15,18,19) in Bezug auf die Gummikörper (15) derart entfernt voneinander angeordnet sind, dass die Stege ohne Beschädigung oder Zerstörung der Gummikörper mechanisch zertrennbar sind.

8. Federelement nach Anspruch 1 und 6, dadurch gekennzeichnet, dass die Gummikörper (16) ihrerseits speichenartig angordnet sind.

9. Federelement in Form eines Torsionsdämpfers für das Schneckenrad eines Schneckengetriebes nach einem oder mehreren vorgehenden Ansprüchen, dadurch gekennzeichnet, dass an die Ringe (11,12) die mit ihnen in Wirkverbindung stehenden Elemente des Getriebes (4,7,9) bei der Ringherstellung einstückig angeformt sind.

10. Federelement nach einem oder mehreren Ansprüchen, dadurch gekennzeichnet, dass die Ringe (11,12) Vorsprünge (13) und/oder Ausnehmungen (14) aufweisen, wobei die Vorsprünge und die Ausnehmungen zur Bildung eines Formschlusses mit entsprechenden Ausnehmungen bzw. Vorsprüngen der benachbarten Elemente korrespondieren.
